# EUROPEAN PATENT SPECIFICATION

(11) **EP 3 096 063 B1**
(45) Date of publication and mention of the grant of the patent: **07.06.2023**
(21) Application number: 14876909.4
(22) Date of filing: 19.12.2014
(51) Int. Cl.: F16L 37/088

(54) **ASSEMBLY COMPRISING A QUICK-COUPLING DEVICE AND A THERMAL LANCE**
ANORDNUNG UMFASSEND EINE SCHNELLKUPPLUNGSVORRICHTUNG UND EINE THERMISCHE LANZE
ENSEMBLE COMPRENANT UN DISPOSITIF D'ACCOUPLEMENT RAPIDE ET UNE LANCE THERMIQUE

(30) Priority: 31.12.2013 CL 2013003811
(43) Date of publication of application: 23.11.2016
(73) Proprietor: Trefimet S.A., Santiago (CL)
(72) Inventor: PEÑA ASTORGA, Victor, Santiago 8320000 (CL)
(74) Representative: ABG Intellectual Property Law, S.L.
(86) International application number: PCT/CL2014/000083
(87) International publication number: WO 2015/100510

(56) References cited:
- EP-A1- 0 014 094
- WO-A1-2013/097045
- CN-Y- 2 172 392
- FR-A1- 2 514 096
- FR-A5- 2 098 769
- US-A- 3 151 891
- US-A- 3 151 891
- US-A- 4 138 146
- US-A- 5 584 512
- US-B1- 7 273 237

## Description

### Field of the Invention

The invention relates to the consumable devices that can be consumed by exothermic reaction, which are used for piercing and opening tapping passages in melting furnaces that use plugs made of clay or mixtures of, *inter alia,* alumina, silica and carbon, used in the smelting of ores such as *inter alia,* copper and steel, by means of applying mixtures of oxidizing gases or pressurized oxygen. In general, the consumable devices of the present invention are suitable for the fusion cutting and/or piercing of any type of material.

More specifically, the invention relates to coupling devices for thermal lances, also referred to as oxygen lances, in which oxidizing gases, such as pressurized oxygen, circulate from one end of said thermal lance to the other. The coupling devices allow coupling two or more thermal lances for the purpose of preventing remnants of pieces of lances when the lances are used.

### Background of the Invention

A thermal lance generally corresponds to a long, narrow tube with an oxidizable outer body and comprising along the entire extension thereof one or more oxidizable inner components, such as solid wires. The inner bodies are distributed inside the outer body, with gaps therebetween. In general, a thermal lance measures from 8 to 50 mm in diameter and from 1 to 12 m in length.

At their ignition end, thermal lances reach temperatures in the order of 3,500°C to 5,530°C, and thermal lance consumption times are in the order of 0.2 to 5 meters per minute, when the pressure of the oxidizing gas is comprised from 392.3 kPa to 980.7 kPa. Since lance consumption times are very short, there must be coupling parts that allow attaching one lance with the next one, and thus not stopping the process. The coupling part must be combustible and have suitable firmness for the purpose of preventing the lance from becoming decoupled.

A type of coupling currently used in thermal lances corresponds to a segment of threaded tubes, which are difficult to assemble since they must be screwed together. Another type of coupling correspond to quick-insertion type, which are easier to fit together but have considerable oxygen stream leakage problems and tend to become detached when the lances move alternately in the axial direction. In practice, this generates extreme difficulty during assembly, leakage in the assemblies and unexpected decoupling, which ultimately leads users to not couple, thereby generating important economic losses due to higher lance consumption since the lances cannot be used in their entirety.

Patent document CN102128328 discloses a connection structure for quickly locking metal pipes and special calipers thereof. The structure for quickly locking comprises a pipe joint and a pipe fitting, wherein the pipe joint comprises a main body and a connecting end; the pipe fitting is inserted in the connecting end; an annular groove is arranged in the inner circle of the connecting end; a sealing ring is arranged in the annular groove; and a polygonal or circular pressing port is arranged inside and outside the annular groove. In addition, the invention discloses calipers for the quick locking connection.

In turn, patent document WO 9425786 discloses a quick-coupling for pipes or hoses comprising a plastic housing having at least one socket with a first part of the cavity. It internally has a locking ring, a spacer ring and a sealing ring and they are all held in position through a retaining ring. Furthermore, it is provided with a metal reinforcing sleeve.

Additionally, in the field of metal pipes there are some types of devices for coupling said pipes, which for the most part have internal threads to achieve coupling.

Document EP 0 014 094 A1 discloses a pipe coupling intended to form part of a sprinkler fire-prevention system.

Document CN 2 172 392 Y discloses an oxygen blast pipe joint for steelmaking.

As can be seen, in the state of the art there are quick-coupling devices made up of several elements that allow attaching the pipes to one another, said devices being intended for controlling fluids and not for material strength, nor are they able to withstand high temperatures. In addition, there are coupling devices made of stronger materials, but said devices are not quick-insertion devices.

For this reason, given the nature of the operation in which thermal lances are used, there is still a need to provide coupling parts for more efficient thermal lances which allow easy and secure quick-coupling with good tightness, good fixing and sufficient flexibility, as required of thermal lances according to their working conditions.

As a result, one objective of the present invention is to develop a coupling device for thermal lances that allows a quick and easy coupling of the lances.

At the same time, another objective of the present invention consists of providing a coupling device reacting in combustion before it melts, the same way thermal lances react.

Another objective of the present invention is to develop a coupling device for thermal lances that provides good flexibility to the coupled lance, for example, being able to bend.

Yet another objective of the present invention is to develop a coupling device for thermal lances that does not need external elements for the coupling, i.e., it only requires the thermal lance being fitted in the coupling part for the coupling, such that the device is firmly fixed to the lances without becoming detached when forces are applied in randomly alternating and opposing directions.

### Summary of the Invention

The present invention consists in an assembly comprising a quick coupling device and a thermal lance as defined in claim 1.

### Brief Description of the Drawings

The invention will be described below in reference to the attached drawings in which:

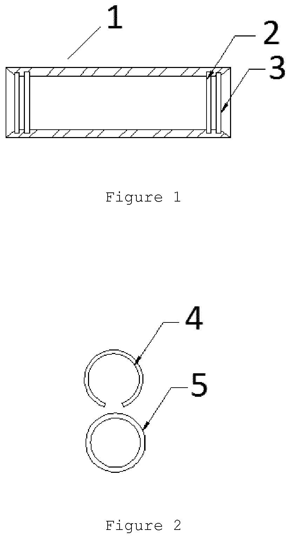

Figure 1 depicts a sectional view of a coupling device for thermal lances like the one of the present invention.
Figure 2 depicts a view of the internal parts of the coupling device of the present invention.

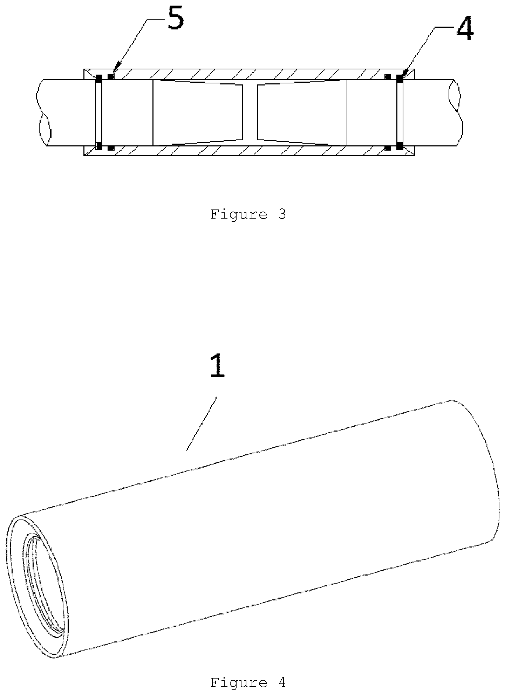

Figure 3 depicts a sectional view of a coupling device with a thermal lance coupled at each end of said device.
Figure 4 depicts a perspective view of the coupling device of the present invention.

### Detailed Description of the Invention

Comprised in the present invention is a coupling device (1) for thermal lances used for the fusion cutting and/or piercing of any type of material, for example, for piercing and opening tapping passages in melting furnaces that use plugs made of clay or mixtures of, *inter alia,* alumina, silica and carbon, comprising a hollow cylinder having bevelled ends and two circular internal grooves (2 and 3) at each end of said device.

The first groove from each end of the coupling device is referred to as pressure ring groove (3) and the second groove towards to the center of the coupling device is referred to as O-ring groove (2). As the name indicates, a pressure ring (4) corresponding to a hardened and tempered steel pressure ring is placed in each pressure ring groove. Likewise, an O-ring (5) with a hardness suitable for generating a good seal is placed in each O-ring groove.

The inner diameter of the coupling device and the size of said device depend on the diameter of the thermal lance, since each coupling device is made according to the diameter of the thermal lance that requires coupling.

The thermal lances to be coupled can be susceptible to coupling at one of their ends or at both ends, depending on the shape of their ends.

The thermal lance having only one end susceptible to coupling with the coupling device has one end with an inverted conical shape, and furthermore at said end with an inverted conical shape immediately before the start of said inverted conical end, the lance has a smooth and cylindrical surface which has an annular external groove.

The thermal lance having two ends susceptible to coupling with the coupling device has both ends with an inverted conical shape and additionally, at each end with an inverted conical shape of the lance, prior to the start of each inverted conical end the lance has a smooth and cylindrical surface which has an annular external groove.

The coupling between a thermal lance and the coupling device is performed by introducing the end of the lance having the inverted conical shape into one of the ends of the coupling device. A coupling device allows retaining up to two thermal lances at the same time, for which purpose a thermal lance is introduced at each end of the device.

The coupling device is quickly and easily coupled with the thermal lance and allows said device to be firmly fixed with the lance since when the thermal lance is introduced into one of the ends of the coupling device, the pressure ring is inserted in the annular external groove of the thermal lance, preventing the possibility of said lance shifting and becoming decoupled; in turn, the O-ring, located inside the coupling device, seals the space between the lance and the coupling device, thereby preventing oxygen or oxidizing gas leaks.

The coupling devices are used for coupling two or three or more lances having the same outer diameter. The outer shape of the thermal lances allows an easy assembly between one lance and another lance through the coupling device of the present invention. The inverted conical ends of the lance allow facilitating the fitting with the coupling device, and the annular external groove of the lance allows assuring the fitting between the lance and the coupling device. A simple axial shift at the end of the lance is sufficient for coupling a lance with the coupling device, whereby the pressure ring enters the groove of the lance and both elements are coupled without the possibility of being decoupled.

The size of the lances is variable and depends on the application given to the lance, and the location of the outer groove at each end of the lance allows the lances to not interfere with one another when they are coupled together.

The attachment of one lance with another lance allows complete consumption of the lances at the time of being used, such that there are no lance remnants and therefore no losses of material, making the operation more cost-effective. The shape of the lances and of the coupling devices allows attaching as many lances as required for the purpose of preventing losses of lances and giving continuity to the operation being carried out.

The coupling device of the present invention can be made of steel, which allows working in high temperature areas, up to 1,300°C, without melting since they have a high melting point, above 1,400°C. In addition to being combustible, the coupling device is low-cost, so the operating costs do not increase when the thermal lances are coupled with such coupling devices. Additionally, the fact that the ignition point of the coupling device is lower than its melting point allows the coupling device to react in combustion together with the thermal lance when it is lit and burns, and therefore the combustion process is not interrupted when the lances are coupled thereto.

The geometry of the coupling device and its dimensions determine a moment of inertia which, together with the strength of the material, allows withstanding all the mechanical traction and compression forces generated in the operation of thermal lances.

The ends of the coupling device are bevelled for the purpose of being used as a guide for the ends of the lance during coupling and so that the pressure ring (4) does not have to be deformed past its elastic limit when assembled or when it enters the pressure ring groove (3).

The assembly of the present invention is easy to couple, does not require any tool or special structure for assembly thereof, does not become decoupled under any operating condition and does not leak. Therefore, use of the assembly of the present invention provides economic benefits since better use is made of the thermal lances, and furthermore more efficient and safer operations are achieved since oxygen or oxidizing gas leaks do not occur, nor does any unexpected decoupling occur, so risks of unwanted combustions due to oxygen leaks and delays in the operation are eliminated.

The thermal lances comprised in the assembly of the present invention have varied uses, for example in the case of cutting copper and slag, specifically in: bottom pots, pigs or settled accretions, furnace windows, furnace floors with brick and copper material, accretions in furnace walls, cleaning in the nozzle housing area, accretions in the gas outlet pre-chamber duct, passage opening, refining and anode furnaces.

The thermal lances to be coupled can also be used for efficiently opening passages in, *inter alia,* copper, steel, ferroalloy, and platinum smelting furnaces, independently of the plugs having any composition, even if they consist of pure graphite (carbon). Likewise, they can be used for cutting and/or piercing steels of any grade or thickness, for example 1,000 mm, 2,000 mm, 3,000 mm and thicker. Likewise, they can be used for cutting concrete blocks or rocks and stones of any type and dimension.

Furthermore, the thermal lances comprised in the assembly of the present invention can be used for the fusion cutting and/or piercing of any type of material, even diamond, which is the most temperature-resistant material.

## Claims

1. An assembly comprising a quick-coupling device (1) and a thermal lance, wherein the coupling device (1) does not require external elements for coupling, wherein the thermal lance is for fusion cutting and/or piercing, for example, for piercing and opening tapping passages in melting furnaces that use plugs made of clay or mixtures of, *inter alia,* alumina, silica and carbon, the coupling device comprising a hollow cylinder having bevelled ends and two circular internal grooves (2, 3) at each end of said device;
wherein the first groove from each end of the coupling device is referred to as pressure ring groove (3), and wherein a hardened and tempered steel pressure ring (4) is placed in each pressure ring groove (3);
wherein the second groove closer to the center of the coupling device is referred to as O-ring groove (2), and wherein an O-ring (5) with a hardness suitable for generating a good seal is placed in each O-ring groove (2);
wherein the coupling device is configured to be coupled with the thermal lance, the thermal lance comprising an inverted conical end and, immediately before the start of said inverted conical end, the lance has a smooth and cylindrical surface which has an annular external groove that allows assuring the fitting between the lance and the coupling device through the insertion of the pressure ring in said annular external groove.

2. The assembly according to claim 1, wherein the thermal lance comprises an additional inverted conical end and, prior to the start of the additional inverted conical end, the lance has a smooth and cylindrical surface which has an annular external groove that allows assuring the fitting between the lance and the coupling device through the insertion of the pressure ring in said annular external groove.

3. The assembly according to either of claims 1 and 2, wherein the coupling device (1) allows coupling a thermal lance at each end of said coupling device (1).

4. A method for coupling thermal lances by means of a coupling device (1), wherein the coupling device (1) does not require external elements for coupling, wherein the coupling device comprises a hollow cylinder having bevelled ends and two circular internal grooves (2, 3) at each end of said device;
wherein the first groove from each end of the coupling device is referred to as pressure ring groove (3), and wherein a hardened and tempered steel pressure ring (4) is placed in each pressure ring groove (3);
wherein the second groove closer to the center of the coupling device is referred to as O-ring groove (2), and wherein an O-ring (5) with a hardness suitable for generating a good seal is placed in each O-ring groove (2);
wherein each thermal lance comprises an inverted conical end and, immediately before the start of said inverted conical end, the lance has a smooth and cylindrical surface which has an annular external groove that allows assuring the fitting between the lance and the coupling device through the insertion of the pressure ring in said annular external groove;
wherein the method comprises introducing the inverted conical end of the lance into one of the ends of the coupling device.

## Patentansprüche

1. Anordnung mit einer Schnellkupplungsvorrichtung (1) und einer thermischen Lanze, wobei die Kupplungsvorrichtung (1) keine externen Elemente zum Verbinden erfordert, wobei die thermische Lanze zum Schmelzschneiden und/oder Schmelzbohren dient, zum Beispiel zum Bohren und Öffnen von Abstichkanälen in Schmelzöfen, die Stopfen aus Ton oder Mischungen von u.a. Aluminiumoxid, Siliciumoxid und Kohlenstoff nutzen, wobei die Kupplungsvorrichtung einen Hohlzylinder mit abgeschrägten Enden und zwei kreisförmigen Innennuten (2, 3) an jedem Ende der Vorrichtung umfasst;
wobei die erste Nut von jedem Ende der Kupplungsvorrichtung aus als Druckringnut (3) bezeichnet wird, und wobei ein Druckring (4) aus vergütetem Stahl in jeder Druckringnut (3) platziert ist;
wobei die näher bei der Mitte der Kupplungsvorrichtung gelegene zweite Nut als O-Ring-Nut (2) bezeichnet wird, und wobei ein O-Ring (5) mit einer zum Erzeugen einer guten Abdichtung geeigneten Härte in jeder O-Ring-Nut (2) platziert ist;
wobei die Kupplungsvorrichtung dazu ausgebildet ist, mit der thermischen Lanze verbunden zu werden, wobei die thermische Lanze ein umgekehrt konisches Ende umfasst und, unmittelbar vor dem Anfang des umgekehrt konischen Endes, die Lanze eine glatte und zylindrische Fläche besitzt, die eine ringförmige Außennut besitzt, mit der die Passung zwischen der Lanze und der Kupplungsvorrichtung durch das Einsetzen des Druckrings in die ringförmige Außennut sichergestellt werden kann.

2. Anordnung nach Anspruch 1, wobei die thermische Lanze ein zusätzliches umgekehrt konisches Ende umfasst und, vor dem Anfang des zusätzlichen umgekehrt konischen Endes, die Lanze eine glatte und zylindrische Fläche besitzt, die eine ringförmige Außennut besitzt, mit der die Passung zwischen der Lanze und der Kupplungsvorrichtung durch das Einsetzen des Druckrings in die ringförmige Außennut sichergestellt werden kann.

3. Anordnung nach einem der Ansprüche 1 und 2, wobei die Kupplungsvorrichtung (1) die Anbindung einer thermischen Lanze an jedem Ende der Kupplungsvorrichtung (1) erlaubt.

4. Verfahren zum Verbinden von thermischen Lanzen mit Hilfe einer Kupplungsvorrichtung (1), wobei die Kupplungsvorrichtung (1) keine externen Elemente zur Verbindung erfordert, wobei die Kupplungsvorrichtung einen Hohlzylinder mit abgeschrägten Enden und zwei kreisförmigen Innennuten (2, 3) an jedem Ende der Vorrichtung umfasst;
wobei die erste Nut von jedem Ende der Kupplungsvorrichtung aus als Druckringnut (3) bezeichnet wird, und wobei ein Druckring (4) aus vergütetem Stahl in jeder Druckringnut (3) platziert ist;
wobei die näher bei der Mitte der Kupplungsvorrichtung gelegene zweite Nut als O-Ring-Nut (2) bezeichnet wird, und wobei ein O-Ring (5) mit einer zum Erzeugen einer guten Abdichtung geeigneten Härte in jeder O-Ring-Nut (2) platziert ist;
wobei jede thermische Lanze ein umgekehrt konisches Ende umfasst und, unmittelbar vor dem Anfang des umgekehrt konischen Endes, die Lanze eine glatte und zylindrische Fläche besitzt, die eine ringförmige Außennut besitzt, mit der die Passung zwischen der Lanze und der Kupplungsvorrichtung durch das Einsetzen des Druckrings in die ringförmige Außennut sichergestellt werden kann;
wobei bei dem Verfahren das umgekehrt konische Ende der Lanze in eines der Enden der Kupplungsvorrichtung eingeführt wird.

## Revendications

1. Un ensemble comprenant un dispositif (1) de raccordement rapide et une lance thermique, le dispositif de raccordement (1) ne nécessitant pas d'éléments extérieurs pour le raccordement, la lance thermique étant pour le coupage et/ou le perçage par fusion, par exemple pour le perçage et l'ouverture de passages de piquage dans des fours de fusion utilisant des bouchons en argile ou en mélanges, entre autres, d'alumine, de silice et de carbone, le dispositif de raccordement comprenant un cylindre creux ayant des extrémités biseautées et deux gorges internes circulaires (2, 3) à chaque extrémité dudit dispositif ;
la première gorge à partir de chaque extrémité du dispositif de raccordement étant appelée gorge à anneau de pression (3), et un anneau de pression (4) en acier trempé et revenu étant placé dans chaque gorge à anneau de pression (3) ;
la deuxième gorge la plus proche du centre du dispositif de raccordement étant appelée gorge à joint torique (2), et un joint torique (5) d'une dureté appropriée pour générer une bonne étanchéité étant placé dans chaque gorge à joint torique (2) ;
le dispositif de raccordement étant configuré pour être raccordé à la lance thermique, la lance thermique comprenant une extrémité conique inversée et, immédiatement avant le début de ladite extrémité conique inversée, la lance ayant une surface lisse et cylindrique qui présente une gorge externe annulaire qui permet d'assurer la venue en engagement ajusté de la lance et du dispositif de raccordement par l'insertion de l'anneau de pression dans ladite gorge externe annulaire.

2. L'ensemble selon la revendication 1, dans lequel la lance thermique comprend une extrémité conique inversée supplémentaire et, avant le début de l'extrémité conique inversée supplémentaire, la lance a une surface lisse et cylindrique qui présente une gorge externe annulaire qui permet d'assurer la venue en engagement ajusté de la lance et du dispositif de raccordement par l'insertion de l'anneau de pression dans ladite gorge externe annulaire.

3. L'ensemble selon l'une ou l'autre des revendications 1 et 2, dans lequel le dispositif de raccordement (1) permet de raccorder une lance thermique à chaque extrémité dudit dispositif de raccordement (1).

4. Un procédé de raccordement de lances thermiques au moyen d'un dispositif de raccordement (1),
dans lequel le dispositif de raccordement (1) ne nécessite pas d'éléments externes pour le raccordement, le dispositif de raccordement comprenant un cylindre creux ayant des extrémités biseautées et deux gorges internes circulaires (2, 3) à chaque extrémité dudit dispositif ;
dans lequel la première gorge à partir de chaque extrémité du dispositif de raccordement est appelée gorge à anneau de pression (3), et dans lequel un anneau de pression (4) en acier trempé et revenu est placé dans chaque gorge à anneau de pression (3) ;
dans lequel la deuxième gorge la plus proche du centre du dispositif de raccordement est appelée gorge à joint torique (2), et dans lequel un joint torique (5) ayant une dureté appropriée pour générer une bonne étanchéité est placé dans chaque gorge à joint torique (2) ;
dans lequel chaque lance thermique comprend une extrémité conique inversée et, immédiatement avant le début de ladite extrémité conique inversée, la lance a une surface lisse et cylindrique qui a une gorge externe annulaire qui permet d'assurer la venue en engagement ajusté de la lance et du dispositif de raccordement par l'insertion de l'anneau de pression dans ladite gorge externe annulaire ;
dans lequel le procédé comprend le fait d'introduire l'extrémité conique inversée de la lance dans l'une des extrémités du dispositif de raccordement.
